# EUROPEAN PATENT APPLICATION

(11) **EP 0 690 318 A1**
(43) Date of publication of application: **03.01.1996**
(21) Application number: 95102505.5
(22) Date of filing: 22.02.1995
(51) Int. Cl.: G02B 6/255

(54) **A method for splicing optical fibers and a splicing apparatus capable of adjusting attenuation**

(30) Priority: 01.07.1994 JP 150709/94
(71) Applicant: FUJITSU LIMITED, Kawasaki-shi, Kanagawa 211 (JP)
(72) Inventor: Ishijima, Shizuo, c/o Fujitsu Ltd, Kawasaki-shi, Kanagawa 211 (JP); Sasaki, Kazuya, c/o Fujitsu Ltd, Kawasaki-shi, Kanagawa 211 (JP)
(74) Representative: Lehn, Werner, Dipl.-Ing.

(57) **Abstract**

Optical fibers (1, 2) are disposed so as to oppose each other with the axes thereof deviating from each other so that an attenuation becomes greater than a designated attenuation, and the opposed portion of the optical fibers is heated and fused by heating means (3) such as an arc discharge heating portion including electrodes (3a,3b) and a power supply portion (3c). The resulting heating fusion portion is repeatedly reheated under the control of a control portion (4) until the designated attenuation is attained, by utilizing the characteristics that the attenuation drops when the heating fusion portion is reheated. In this way, fine adjustment of the attenuation can be carried out.

## Description

### BACKGROUND OF THE INVENTION

### 1. Field of the Invention

This invention relates to a splicing method for optical fibers and a splicing apparatus capable of splicing two optical fibers with a desired attenuation (a designated attenuation), and capable of adjusting the attenuation.

### 2. Description of the Related Art

A variety of optical communication systems employing optical fibers have been developed and, in such a system, the necessity for splicing the optical fibers arises. In this case, an optical connector is used at portions at which connection and disconnection are necessary, and permanent connection by heating fusion, etc., is used at portions at which connection and disconnection are not necessary. Efforts have been made, in this permanent connection technology, that is, a splicing technology, to reduce the connection loss, and it has become possible to make connections with a loss of only about 0.05 dB.

In contrast, because various optical components have been integrated in recent years, combinations of various component modules have been employed in system construction, too. In this case, the necessity for adding desired losses has arisen in connections between the modules in such a manner as to correspond to module characteristics, and a construction for connecting them through optical attenuators has been employed. Accordingly, it is necessary for the splicing technology, too, to be capable of adding a desired loss.

The splicing method according to the prior art brings the axes of two optical fibers into perfect conformity with each other and heats and fuses them by arc discharge, for example, so as to attain the low loss. However, the demand for the splicing technology which imparts a desired attenuation exists as described above. Japanese Unexamined Patent Publication (Kokai) No. 4-243201, for example, proposes a splicing construction wherein two optical fibers are spliced with their axes deviating from each other.

This method of splicing the optical fibers with the axes thereof deviating from each other according to the prior art first determines a deviation of the axes corresponding to a designated attenuation on the basis of an approximation formula representing the relation between the deviation of the axes and the attenuation, then disposes the two optical fibers with the axes thereof deviating from each other so as to attain the deviation so determined, and heats and fuses the optical fibers by arc discharge so as to produce an optical attenuator.

The construction of the prior art example described above, wherein the optical fibers are spliced with their axes deviating from each other, can obtain the relationship between the deviation of the axes and the attenuation from the approximation formula, it is true, but it is by no means easy to accurately accomplish the deviation corresponding to the designated attenuation. In other words, according to the normal or standard splicing technology which splices the optical fibers with their axes kept in conformity with each other, it is only necessary to conduct adjustment by observing in magnification the opposed portion of the two optical fibers and then adjusting them so that the deviation of their axes becomes zero. Nonetheless, it is not easy to dispose the optical fibers so as to oppose each other with their axes deviating from each other at a level of accuracy below several microns. Therefore, the splicing technology involves large variance, low accuracy and high cost.

### SUMMARY OF THE INVENTION

It is an object of the present invention to make it possible to easily set, and finely adjust, an attenuation to a predetermined attenuation when optical fibers are spliced.

According to the first aspect of the present invention, there is provided a method for splicing optical fibers with a designated attenuation, capable of adjusting the attenuation, which comprises a step of so disposing two optical fibers as to oppose each other with the axes thereof deviating from each other and heating and fusing the opposed portion by heating means, and a step of repeatedly reheating the fused portion by the heating means until the designated attenuation is attained, and finely adjusting the attenuation.

According to the second aspect of the present invention, there is provided an apparatus for splicing optical fibers with a designated attenuation, capable of adjusting the attenuation, which comprises heating means for heating and fusing opposed portions of two optical fibers, holding portions for holding the two optical fibers in opposition to each other in such a manner that the deviation of the axes of the two optical fibers can be adjusted, an attenuation measurement portion for measuring the attenuation between the two optical fibers, and control portion for controlling each of the heating means, the holding portions and the attenuation measurement portion, wherein the control portion includes a data base including data representing the relationship between an initial attenuation when the two optical fibers are so disposed as to oppose each other with the axes thereof deviating from each other and an attenuation which changes in accordance with the number of times of reheating, an axis adjustment portion for controlling the holding portions so that the initial attenuation described above can be obtained, and a heating control portion for controlling repetition of reheating by the heating means in such a manner as to correspond to the difference between the measurement result from the attenuation measurement portion and the designated attenuation.

These and other features and advantages of the present invention will be more apparent from the following description when taken in conjunction with the accompanying drawings.

### BRIEF DESCRIPTION OF THE DRAWINGS

Figure 1 is an explanatory view useful for explaining the outline of the present invention;
Fig. 2 is a block diagram showing an embodiment of the present invention;
Fig. 3 is a flowchart of a splicing method according to an embodiment of the present invention;
Fig. 4 is an explanatory view showing a correlation between a deviation of an axis and attenuation;
Fig. 5 is an explanatory view showing a correlation of attenuation at the time of axis adjustment and after connection;
Fig. 6 is an explanatory view showing a correlation between the number of times of discharge (number of times of reheating) and the change of attenuation;
Fig. 7 is an explanatory view of the splicing operation according to an embodiment of the present invention;
Fig. 8 is an explanatory view of a data base showing the relation between the number of times of discharge (number of times of reheating) and the change of attenuation; and
Fig. 9 is a flowchart useful for explaining other splicing methods that can be practiced by using an apparatus according to an embodiment of the present invention.

### DESCRIPTION OF THE PREFERRED EMBODIMENTS

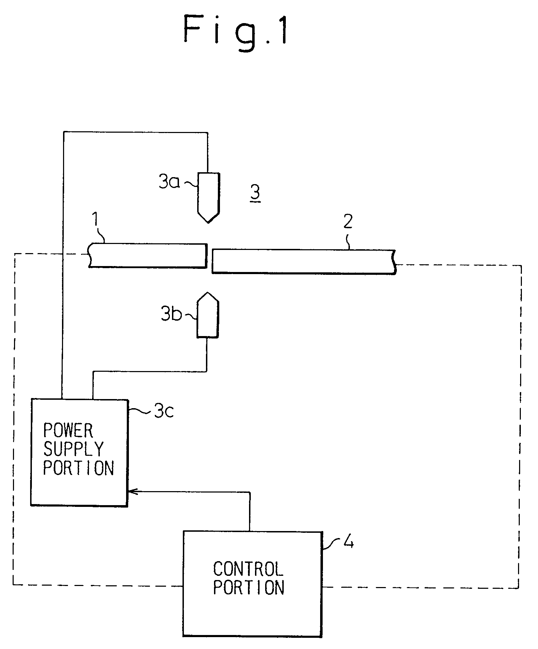

First, the inventions corresponding to the appended claims will be explained with reference to Fig. 1 prior to the explanation of preferred embodiments of the present invention.
(1) A splicing method for optical fibers according to the present invention includes a step of disposing two optical fibers 1 and 2 in such a manner as to oppose each other with the axes thereof deviating from each other, and heating and fusing the opposed portions of the optical fibers by heating means 3, and a fine adjustment step of finely adjusting the attenuation by repeatedly reheating the heating fusion portion by the heating means 3 until designated attenuation is attained.
(2) In the steps of the item (1) described above, the method may include a step of constituting the heating means 3 by an arc discharge heating portion for generating arc discharge between electrodes 3a and 3b, heating and fusing the opposed portion of the two optical fibers 1, 2, so disposed as to oppose each other with the axes thereof deviating from each other, by the arc discharge between the electrodes 3a and 3b of the arc discharge heating portion, then repeatedly reheating the heating fusion portion by the arc discharge and finely adjusting the attenuation until the designated attenuation is attained.
(3) In the step described in the item (1), the method may include a step of disposing the deviation measurement means for measuring the deviation of the axes of the two optical fibers 1, 2, disposing the optical fibers in such a manner as to oppose each other with the axes thereof deviating from each other on the basis of a correlation chart between the deviation of the axes and the attenuation, heating and fusing the opposed portion by the heating means 3, repeatedly reheating the heating fusion portion by the heating means 3 and thus adjusting finely the attenuation.
(4) In the step described in the item (1), the method may include a step of disposing a measurement means, inclusive of an optical power meter, for measuring the attenuation between the two optical fibers 1, 2, disposing the two optical fibers 1, 2 in such a manner as to oppose each other with the axes thereof deviating from each other so that a measured attenuation by the measurement means attains an initial attenuation, on the basis of a correlation chart between the initial attenuation due to the deviation of the axes when the two optical fibers 1, 2 are so disposed as to oppose each other and the attenuation when they are coupled by heating fusion, heating and fusing the opposed portion by the heating means 3, and repeatedly reheating the heating fusion portion by the heating means 3 until the attenuation measured by the measurement means attains the designated attenuation.
(5) A splicing apparatus for optical fibers according to the present invention includes heating means 3 for heating and fusing an opposed portion of two optical fibers 1, 2, a holding portion for opposedly arranging the two optical fibers 1, 2 so that the deviation of the axes thereof can be adjusted, an attenuation measurement portion for measuring the attenuation between the two optical fibers 1, 2, and a control portion 4 for controlling the heating means 3, the holding portion and the attenuation measurement portion, wherein the control portion includes a data base containing data representing the relation between an initial attenuation when the two optical fibers 1, 2 are so disposed as to oppose each other with the axes deviating from each other and the attenuation that changes in accordance with the number of times of reheating, an axis adjustment portion for controlling the holding portion so that the initial attenuation can be obtained, and a heating control portion for effecting repetition control of reheating by the heating means 3 in such a manner as to correspond to the difference between the measurement result by the attenuation measurement portion and the designated attenuation.
(6) The heating means 3 described above can be constituted by an arc discharge heating portion including electrodes 3a and 3b disposed so as to oppose each other and to orthogonally cross the opposed portion of the two optical fibers 1 and 2, and a power supply portion 3c for applying a voltage between these electrodes 3a and 3b and generating arc discharge.

Next, the operation which is carried out by the construction of the invention is described for each of the items given above.
(1) An attenuation approximate to the desired attenuation can be obtained by heating and fusing the opposed portion of the two optical fibers 1, 2 so disposed as to oppose each other with the axes thereof deviating from each other by the heating means 3. Next, when this heating fusion portion is repeatedly reheated, the attenuation changes. The attenuation produced by the deviation of the axes gradually drops when the reheating is repeated, and after it drops to a certain extent, it tends to increase. Therefore, fine adjustment can be made to attain the designated attenuation by deviating the axes so as to attain an attenuation slightly greater than the designated attenuation, effecting heating fusion and repeating reheating.
(2) The heating means 3 is constituted by the arc discharge heating portion, and the opposed portion of the two optical fibers 1, 2 so disposed as to oppose each other with the axes thereof deviating from each other, is heated and fused by the arc discharge while the voltage applied between the electrodes 3a, 3b and the application time are adjusted. The heating fusion portion is again heated by the arc discharge, and fine adjustment is carried out by repeating reheating by arc discharge until the attenuation reaches the designated attenuation.
(3) Two optical fibers 1 and 2 are so disposed as to oppose each other with the axes thereof deviating from each other in accordance with an attenuation of the axes, which provides an attenuation slightly greater than a designated attenuation, on the basis of a correlation chart showing the relationship between the deviation of the axes and the attenuation. The opposed portion is heated and fused by the heating means 3, and fine adjustment is carried out by repeating the reheating of the heating fusion portion until the designated attenuation is obtained.
(4) Two optical fibers 1 and 2 are disposed so as to oppose each other with the axes thereof deviating from each other, the attenuation is measured by the measurement means, the deviation of the axes is adjusted so as to obtain an initial attenuation corresponding to an attenuation slightly greater than a designated attenuation on the basis of a correlation chart, the opposed portion is then heated and fused, the heating fusion is next reheated, the attenuation is measured by the measurement means, and fine adjustment is carried out by repeating reheating until the designated attenuation is obtained.
(5) The deviation of the axes of the two optical fibers 1 and 2 held by the holding portion is adjusted under the control of the axis adjustment portion while the attenuation is measured by the attenuation measurement portion by looking up the data base so that an initial attenuation corresponding to a designated attenuation can be obtained, and the opposed portion of the two optical fibers 1 and 2 is heated and fused by the heating means 3 controlled by the heating control portion. Next, while the attenuation is measured by the attenuation measurement portion, reheating is effected by the heating means 3, and this reheating is repeated until the designated attenuation is obtained.
(6) The arc discharge heating portion includes the electrodes 3a and 3b disposed in such a manner as to oppose each other while interposing the optical fibers 1 and 2 between them at the positions orthogonally crossing the two optical fibers 1, 2 opposing each other, a voltage is applied from the power supply portion 3c to the electrodes 3a, 3b so as to generate arc discharge, and the opposed portion of the optical fibers 1, 2 is heated and fused by this arc discharge.

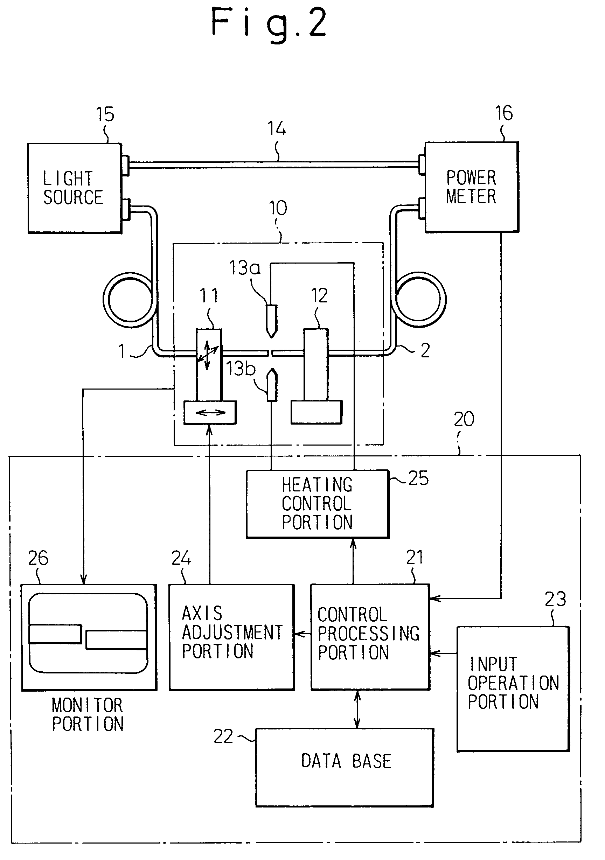

Next, Fig. 2 is a block diagram showing an apparatus according to an embodiment of the present invention. In Fig. 2, reference numerals 1 and 2 denote the optical fibers, 10 is a splicing portion, 20 is a control portion, 11 and 12 are holding portions, 13a and 13b are electrodes, 14 is an auxiliary optical fiber, 15 is a light source, 16 is a power meter, 21 is a control processing portion, 22 is a data base, 23 is an input operation portion, 24 is an axis adjustment portion, 25 is a heating control portion, and 26 is a monitor portion.

The optical fibers 1 and 2 to be spliced are fitted to the holding portions 11 and 12. The holding portion 11 is so disposed as to be movable in the X, Y and Z directions, for example, and is controlled by the axis adjustment portion 24, whereas the holding portion 12 is kept stationary. Light is allowed to be incident from the light source 15 into the auxiliary optical fiber 14 and into the optical fiber 1, and light from the optical fiber 2 is compared, using the power meter 16, with light passing through the auxiliary optical fiber 14 as the reference. In this case, since the loss of the auxiliary optical fiber 14 is known in advance, the attenuation between the optical fibers 1 and 2 can be measured. Here, the X direction is a direction perpendicular to the sheet of the drawing, for example, the Y direction exists in the vertical direction of the drawing and the Z direction exists in the transverse direction of the drawing.

The heating means can utilize laser heating, gas heating and so forth, but this embodiment represents the case where an arc discharge heating portion is disposed. The electrodes 13a and 13b are disposed in such a manner as to interpose the opposed portion of the optical fibers 1 and 2 and to orthogonally cross the opposed portion. The opposed portion of the optical fibers 1 and 2 is heated by the arc discharge when it is generated between the electrodes 13a and 13b.

The monitor portion 26 has a construction such that it can accept the image of the opposed portion of the optical fibers 1 and 2 from the X and Y directions and can display it in magnification. The drawing shows an example of the image taken from either one of the X and Y directions. Since the size is displayed on the display screen, the deviation of the axes can be illustrated.

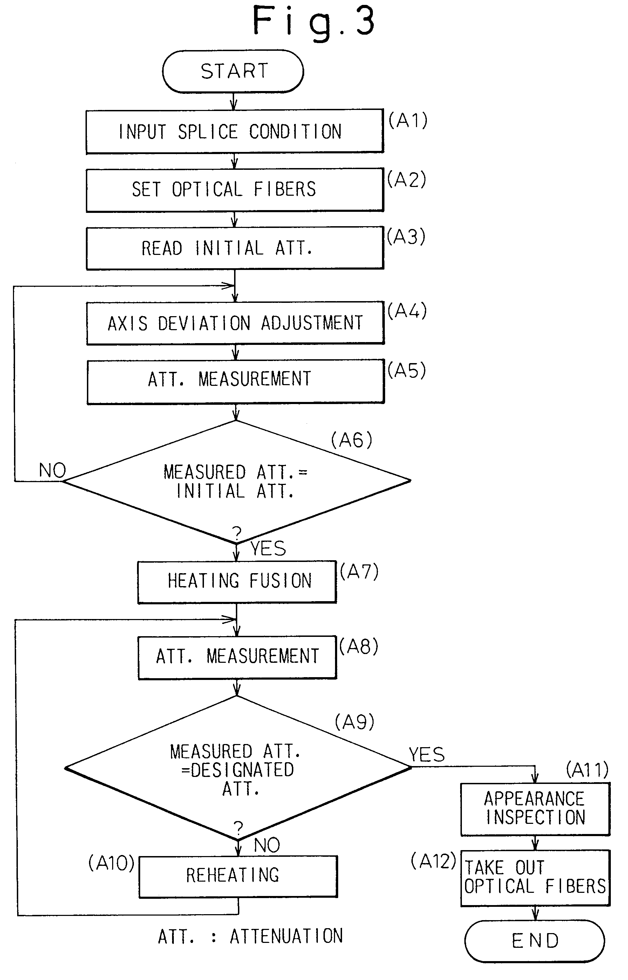

Figure 3 is a flowchart showing a splicing method according to an embodiment of the present invention. Splicing conditions inclusive of a designated attenuation (other factors include power of arc discharge, application time, moving speed of optical fibers, etc., for example) are inputted by the input operation portion 23 (A1), and the optical fibers 1 and 2 are set to the splicing portion 10 (A2). In other words, the optical fibers 1 and 2 are held by the holding portions 11 and 12, respectively. Next, the control processing portion 21 reads out the initial attenuation corresponding to the designated attenuation from the data base 22 (A3), and adjustment of the deviation of the axes is carried out by controlling the holding portion 11 by the axis adjustment portion 24 (A4). This deviation of the axes can be observed using the monitor portion 26.

Next, the light source 15 and the power meter 16 are operated so as to measure the attenuation (A5). The measured attenuation is compared with the initial attenuation (A6). When they are not equal, the flow returns to the step (A4), where the adjustment of the deviation of the axes is carried out by controlling the holding portion 11 by the axis adjustment portion 24. When the measured attenuation becomes equal to the initial attenuation, the voltage is applied from the heating control portion 25 to the electrodes 13a and 13b so as to generate an arc discharge, and the opposed portions of the optical fibers 1 and 2 are heated and fused by this arc discharge (A7).

The attenuation of the optical fibers 1 and 2 so heated and fused is measured (A8), and the measured attenuation is compared with the designated attenuation (A9). When they are not equal, the arc discharge is again generated between the electrodes 13a and 13b and the heating fusion portion is reheated (A10). The attenuation is measured (A8), and reheating (A10) is repeated until the measured attenuation and the designated attenuation become equal to each other. When they become equal to each other, an appearance inspection is conducted (A11) and then the optical fibers 1, 2 are removed from the holding portions 11, 12 (A12). In this way, the splicing processing is completed.

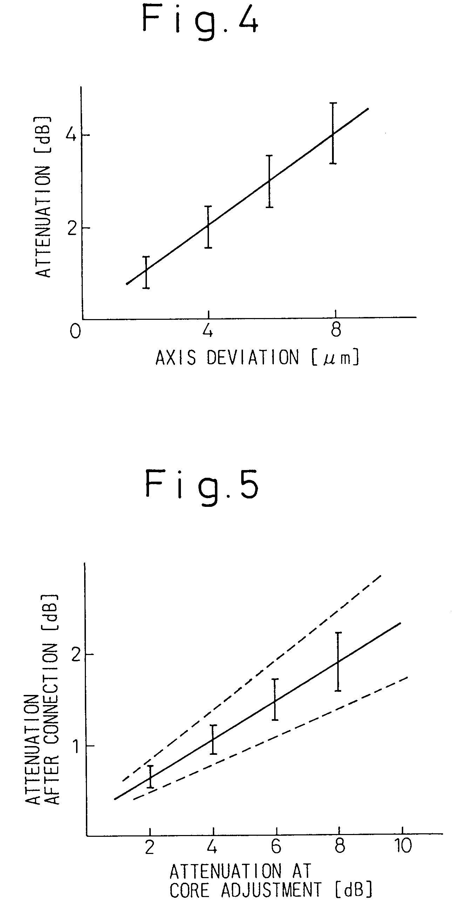

The relation between the deviation of the axes of the optical fibers 1, 2 and the attenuation is shown in Fig. 4, for example. When the deviation of the axes is 4 µm, for example, the attenuation is 2 dB and when the former is 8 µm the latter is 4 dB. In other words, the greater the deviation of the axes, the greater becomes the attenuation. The attenuation with respect to the deviation of the axes generally has a variation of about 1 dB. Such a relation can be compiled into the data base as a correlation chart. The attenuation corresponding to the deviation of the axes of the optical fibers 1, 2 at the time of the axis adjustment drops after the optical fibers are connected by the arc discharge, and its relation is shown in Fig. 5, for example. When the attenuation is set to 4 dB with the deviation of the axes being 8 µm and then heating fusion is effected by arc discharge, for example, the attenuation becomes 1 dB in the case of the characteristics represented by a curve of a solid line. The relation (Fig. 5) of the solid line or the dotted line is provided depending on the splicing condition such as the power of the arc discharge, and the variation of the attenuation after connection with respect to the attenuation at the time of axis adjustment is generally about 0.5 dB. Such a relation can be compiled into the data base as the correlation chart.

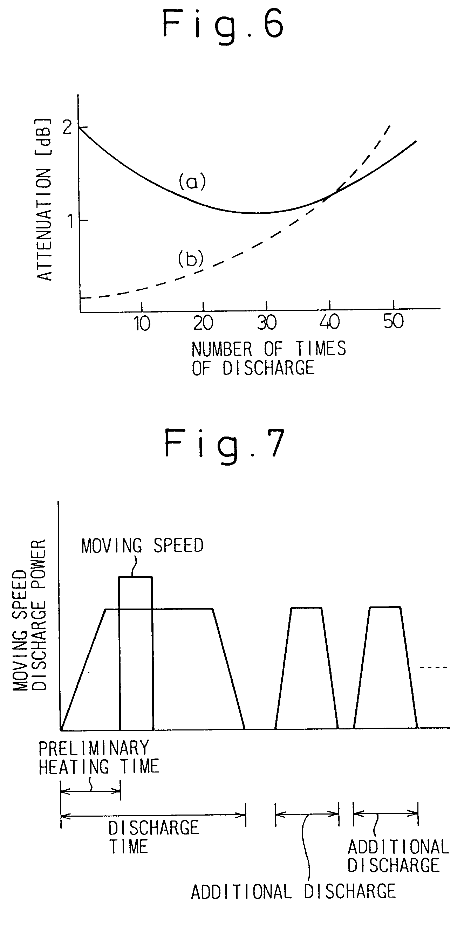

Figure 6 is an explanatory view showing the relation between the number of times of discharge (number of times of reheating) and the change in the attenuation. When the attenuation immediately after splicing the optical fibers with the axes thereof deviating from each other is 2 dB, the attenuation gradually drops after repeated arc discharge and reheating as represented by the curve of the solid line (a), becomes a minimum when the number of times is about 30, and increases when the arc discharge is repeated more than about 30 times. Accordingly, if the designated attenuation is 1.5 dB, the attenuation of 2 dB immediately after splicing becomes coincident with this designated attenuation by repeating arc discharge 10 times, and according to the experiments, the attenuation could be adjusted to the designated attenuation with accuracy of below 0.05 dB. When the attenuation immediately after standard splicing which brings the axes of the optical fibers into conformity is 0.1 dB, the attenuation gradually increases by repeating arc discharge and conducting reheating as represented by the curve of the dotted line (b).

By utilizing the characteristics represented by the curve of the solid line (a) in Fig. 6, the present invention splices the optical fibers 1, 2 with the axes thereof deviating from each other so that the attenuation becomes slightly greater than the designated attenuation, and then conducts fine adjustment of the attenuation by repeating an arc discharge so as to attain the designated attenuation. The conditions associated with the attenuation described above, etc., can be compiled into the data base and automation can be accomplished by using such a data base.

Figure 7 is an explanatory view useful for explaining the splicing operation of the embodiment of the present invention, and shows the discharge power of the arc discharge (relative level) and a moving speed when the optical fiber 1 is moved towards the optical fiber 2. After the arc discharge is started and preliminary heating is made, the holding portion 11 shown in Fig. 2 is moved at a predetermined speed towards the holding portion 12 under the control of the axis adjustment portion 24. In this way, the opposed portion of the optical fibers 1 and 2 is heated and fused by arc discharge. As described above, additional discharge is repeated until the attenuation becomes the designated attenuation.

When the discharge time is 2,000 ms, for example, the preliminary heating time can be set to 150 ms, for example. When the gap between the optical fibers 1 and 2 is 2 µm, the moving time can be set to 23 ms. During the discharge time, preliminary heating time and moving time can be set so as to correspond to discharge power. As to additional discharge, only the number of times of repetition can be controlled by setting the discharge time in advance, and discharge power, etc., can also be set in such a manner as to correspond to the difference between the measured attenuation and the designated attenuation whenever an additional discharge is started.

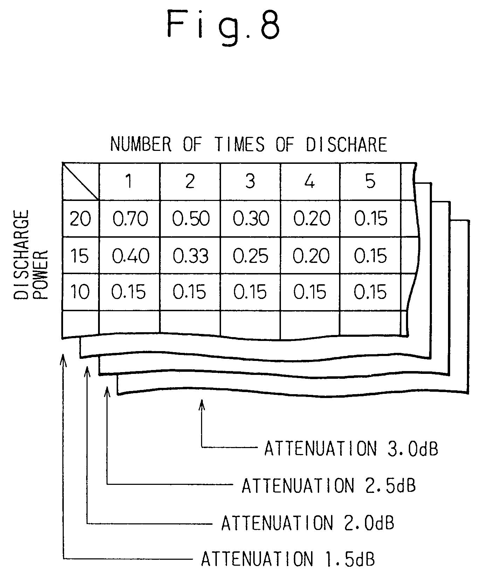

Figure 8 is an explanatory view of a data base representing the relation between the number of times of discharge (number of times of reheating) and the change in the attenuation. The drawing shows a part of the data base 22 shown in Fig. 2. It shows that when the attenuation immediately after splicing is 1.5 dB, the change of attenuation when the number of times of discharge is 1 is 0.70 dB at a discharge power (relative level) of 20, and is 0.5 dB when the number of times of discharge is 2, for example. The drawing shows that the change of attenuation is great at the beginning of additional discharge. When discharge power becomes small, the change of attenuation becomes small, too, and when the number of times of additional discharge is great, the change in attenuation remains at substantially the same level. The data base stores the data of the change of attenuation depending on discharge power and the number of times of discharge for the cases where the attenuation immediately after splicing is 2.0 dB, 2.5 dB, 3.0 dB, and so forth.

The data base can be constituted of data which include the upper limit data of the number of times of additional discharge on the basis of the kind of the optical fibers to be spliced, discharge power, etc., limit data of an end face angle because there are many cases where the predetermined attenuation cannot be obtained when the end face angle of the optical fibers 1 and 2 exceeds a predetermined value, correspondence data of the difference range of the measured attenuation and the designated attenuation with respect to the discharge power of the additional discharge condition, and so forth.

When the data base 22 described above is used, the control processing portion 21 inputs the kind of the optical fibers 1 and 2 and the designated attenuation from the input operation portion 23, looks up the data base 22, controls the axis adjustment portion 24 and the heating control portion 25, determines the initial attenuation corresponding to the designated attenuation, measures the attenuation by the light source 15 and the power meter 16, deviates the axes of the optical fibers 1 and 2, using the holding portion 11, so that the initial attenuation becomes equal to the measured attenuation, generates arc discharge between the electrodes 13a and 13b using the heating control portion 25, and heats and fuses the optical fibers 1, 2.

The difference between the designated attenuation and the measured attenuation is obtained by measuring the attenuation between the optical fibers 1 and 2 so heated and fused, and determining which additional discharge conditions, etc., are selected. This additional discharge is repeated under the control of the heating control portion 25, and adjustment can be made so as to obtain the designated attenuation. In other words, complete automation can be accomplished, and the designated attenuation can be obtained with a high level of accuracy. When laser heating or gas heating is used as the heating means, control is also done in such a manner that after the optical fibers 1 and 2 are heated and fused with the axes thereof deviating from each other and reheating is repeated until the designated attenuation is obtained.

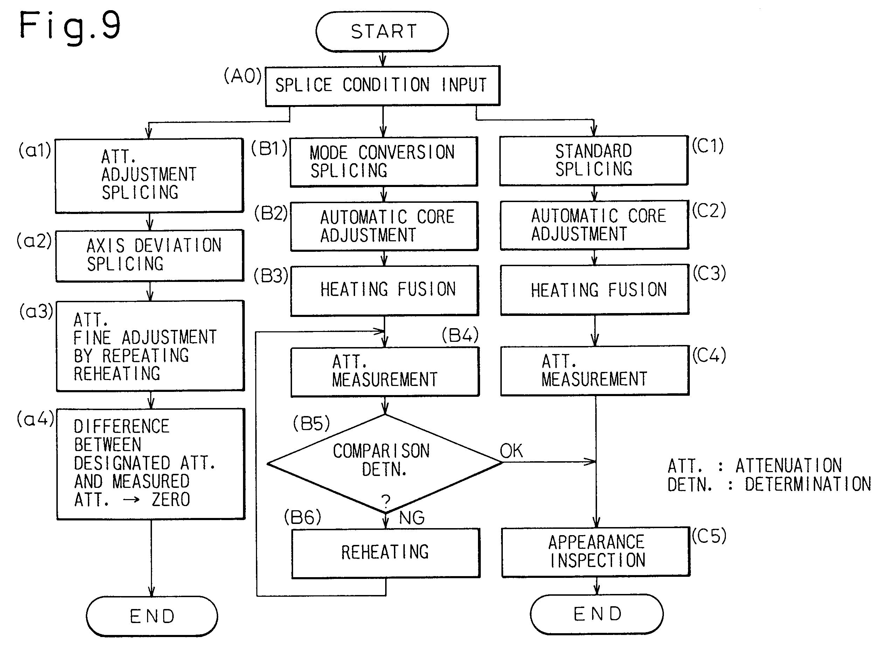

Figure 9 is a flowchart useful for explaining another splicing method using the apparatus of the present invention. First, whether the splicing mode is the attenuation adjustment splice (a1) of the embodiment described above or a mode conversion splice (B1) for splicing optical fibers having mutually different core diameters, etc., or the standard splice (C1) for bringing the axes into conformity is determined depending on the splice condition input (A0). In other words, the control processing portion 21 determines the splicing condition by the input from the input operation portion 23 by using the splicing apparatus shown in Fig. 2.

When the splicing mode is the attenuation adjustment splice (a1) as in the foregoing embodiments, the opposed portions of the optical fibers 1, 2 held by the holding portions 11, 12 are set to the predetermined deviation so as to attain the initial attenuation by the control of the axis adjustment portion 24. Next, the axis deviation splicing (a2), which heats and fuses the opposed portion of the optical fibers 1, 2 under the control of the heating control portion 25 is carried out, and fine adjustment of the attenuation (a3) by repeating reheating is then carried out to remove the difference from the designated attenuation under the control of the heating control portion 25. The processing of attenuation adjustment splicing is completed when the difference between the designated attenuation and the measured attenuation becomes zero (a4).

In the case of the mode conversion splicing (B1), core adjustment is automatically made for the optical fibers 1, 2 held by the holding portions 11, 12, although their diameters are different (B2). This is carried out by moving the holding portion 11 in the X, Y and Z directions under the control of the axis adjustment portion 24, and adjusting the attenuation so that the attenuation measured by the light source 15 and the power meter 16 becomes minimal. Next, arc discharge is generated between the electrodes 13a and 13b by the heating control portion 25 so as to heat and fuse the opposed portion of the optical fibers (B3).

Measurement of the attenuation is then carried out (B4), and whether or not the measured attenuation is below the predetermined value is determined (B5). When the measured value is not below the predetermined value (NG), reheating is carried out (B6) and the measurement of the attenuation is conducted (B4). Whether or not the attenuation so measured is below the predetermined value is determined (B5). These processes are repeated. In other words, heating is repeated in the way very analogous to the case of the axis deviation splicing. After the attenuation gradually drops by so doing, it tends to again increase from the minimum attenuation. When the attenuation becomes smaller than the predetermined value (OK) as reheating (B6) is repeated, the appearance inspection (C5) is conducted, and the processing of the mode conversion splicing is thus completed.

In the case of standard splicing (C1), the optical fibers 1 and 2 held by the holding portions 11, 12 are generally of the same kind. Therefore, automatic core adjustment is made so that their axes are in conformity with each other. This can be accomplished by moving the holding portion 11 in the X, Y and Z directions under the control of the axis adjustment portion 24 while measurement of the attenuation is conducted, in the same way as in the case of automatic core adjustment (B2)in the mode conversion splicing processing described above so that the attenuation becomes minimal. Alternatively, the monitor image is processed so that adjustment can be made to bring the deviation zero.

When the axes become coincident with each other after automatic axis adjustment, arc discharge is generated between the electrodes 13a and 13b under the control of the heating control portion 25 and the opposed portions of the optical fibers are heated and fused (C3). After the attenuation is measured (C4), the appearance inspection (C5) is carried out and the standard splicing processing is thus completed. In this standard splicing processing, the repetition processing of reheating is not carried out.

As described above, the present invention provides the following effects which correspond to the appended claims, respectively.
(1) The opposed portions of the two optical fibers 1, 2 are heated and fused by the heating means 3 while their axes deviate from each other, and the heating fusion portion is repeatedly reheated until the attenuation becomes the designated attenuation. Accordingly, splicing can be conducted while the attenuation is finely adjusted.
(2) When the heating means 3 comprises the arc discharge heating portion, setting and control of discharge power, the discharge time, etc., can be easily made. Therefore, the advantage that control for finely adjusting the attenuation by repeating the reheating process can be obtained.
(3) The deviation of the axes is determined from the correlation chart between the deviation of the axes and the attenuation, and the axes of the optical fibers 1 and 2 are so disposed as to oppose each other in accordance with the deviation so calculated. The opposed portion is then heated and fused by the heating means 3. In this way, an attenuation slightly greater than the designated attenuation can be easily obtained. When fine adjustment of the attenuation is executed by the reheating processing, a high precision attenuation can be easily obtained.
(4) The initial attenuation is determined on the basis of the correlation chart between the initial attenuation due to the deviation of the axes and the attenuation after the connection of the optical fibers by heating fusion. Next, the attenuation is measured by the measurement means, and the axes of the optical fibers 1, 2 are deviated relative to each other so as to attain the initial attenuation and are then heated and fused by the heating means 3. The attenuation is again measured by the measurement means, and fine adjustment is carried out by repeating reheating in such a manner as to correspond to the difference between the measured attenuation and the designated attenuation. In this way, all the process steps can be automated, and a high precision attenuation can be obtained.
(5) The optical fibers 1 and 2 are held in such a manner that the deviation of the axes thereof can be adjusted. The opposed portions of the optical fibers 1, 2 are heated and fused by the heating means 3 and the attenuation is measured. The deviation of the axes is set on the basis of various conditions of the optical fibers 1, 2 and the designated attenuation, and heating fusion is controlled, or repetition control of reheating is executed, by the control portion 4 so as to attain the designated attenuation. Accordingly, splicing of the optical fibers 1, 2 under various conditions can be automated.
(6) When the heating means 3 of the splicing apparatus comprises an arc discharge heating portion, discharge power, the discharge time, the discharge interval, and so forth, can be easily set in accordance with various splicing conditions. Accordingly, automation of fine adjustment of the attenuation by the reheating processing can be accomplished.

## Claims

1. A splicing method for optical fibers with a designated attenuation, capable of adjusting the attenuation, characterized by including:
a step of disposing two optical fibers (1), (2) in such a manner as to oppose each other with the axes thereof deviating from each other, and heating and fusing the opposed portion by heating means (3); and
a step of finely adjusting the attenuation by repeating reheating of the heating fusion portion by said heating means (3) until said heating fusion portion attains the designated attenuation.

2. A splicing method for optical fibers capable of adjusting an attenuation according to claim 1, wherein said heating means (3) comprises an arc discharge heating portion for generating an arc discharge between electrodes, and which further includes a step of heating and fusing the opposed portion of said two optical fibers (1), (2) so disposed as to oppose each other with the axes thereof deviating from each other, by the arc discharge between said electrodes generated by said arc discharge portion and finely adjusting the attenuation by repeatedly reheating said heating fusion portion by said arc discharge until the attenuation attains the designated attenuation.

3. A splicing method for optical fibers capable of adjusting an attenuation according to claim 1, which further includes a step of disposing measurement means for measuring a deviation of the axes of said two optical fibers (1), (2), by disposing said two optical fibers (1), (2) in such a manner as to oppose each other with the axes thereof deviating from each other on the basis of a correlation chart of the deviation of the axes and the attenuation, heating and fusing the opposed portion by said heating means (3), and finely adjusting the attenuation by repeatedly reheating said heating fusion portion by said heating means (3).

4. A splicing method for optical fibers capable of adjusting an attenuation according to claim 1, which further includes a step of disposing measurement means, inclusive of an optical power meter, for measuring the attenuation between said two optical fibers (1), (2), so disposing said two optical fibers (1), (2) as to oppose each other with the axes thereof deviating from each other so that an attenuation measured by said measurement means becomes an initial attenuation, on the basis of a correlation chart between the initial attenuation due to the deviation of the axes when said two optical fibers (1), (2) are so disposed as to oppose each other and an attenuation when said two optical fibers (1), (2) are spliced by heating fusion, heating and fusing the opposed portion, and repeatedly reheating the heating fusion portion by said heating means (3) until the attenuation measured by said measurement means becomes the designated attenuation.

5. A splicing apparatus for optical fibers capable of adjusting an attenuation, characterized by including:
heating means (3) for heating and fusing an opposed portion of two optical fibers (1), (2);
holding portions for holding said two optical fibers (1), (2) in such a manner as to be capable of adjusting a deviation of the axes of said two optical fibers (1), (2);
an attenuation measurement portion for measuring an attenuation between said two optical fibers (1), (2); and
a control portion (4) for controlling each of said portions;
wherein said control portion (4) includes:
a data base including data representing the relation between an initial attenuation when said two optical fibers (1), (2) are so disposed as to oppose each other with the axes thereof deviating from each other and an attenuation changing in accordance with the number of times of reheating;
an axis adjustment portion for controlling said holding portions in such a manner that said initial attenuation can be obtained; and
a heating control portion for controlling repetition of reheating by said heating means (3) in such a manner as to correspond to the difference between the measurement result obtained by said attenuation measurement portion and the designated attenuation.

6. A splicing apparatus for optical fibers capable of adjusting an attenuation according to claim 5, wherein said heating means (3) comprises an arc discharge portion including electrodes so disposed as to oppose each other while interposing the opposed portion of said two optical fibers (1), (2) between them and to orthogonally cross the opposed portion and a power supply portion for applying a voltage to said electrodes.
